# EUROPEAN PATENT APPLICATION

(11) **EP 4 726 789 A1**
(43) Date of publication of application: **15.04.2026**
(21) Application number: 24868784.0
(22) Date of filing: 19.09.2024
(51) Int. Cl.: H01M 4/04, B30B 3/04, B30B 15/34

(54) **ELECTRODE MANUFACTURING APPARATUS**

(30) Priority: 21.09.2023 KR 20230126158
(71) Applicant: LG Energy Solution, Ltd., Seoul 07335 (KR)
(72) Inventor: YOON, Tae Gyun, Daejeon 34122 (KR); PARK, Jin Hui, Daejeon 34122 (KR); SHIN, Gi Chang, Daejeon 34122 (KR); SEOL, Jeong Soo, Daejeon 34122 (KR)
(74) Representative: Plasseraud IP
(86) International application number: PCT/KR2024/096161
(87) International publication number: WO 2025/063810

(57) **Abstract**

The technology idea of the present invention provides an electrode manufacturing apparatus including a first rolling roll and a second rolling roll spaced apart from each other with an electrode sheet therebetween, and an induction heater configured to apply a high-frequency heating power source to at least one of the first rolling roll and the second rolling roll, in which the induction heater is configured to control a temperature of each region of the first rolling roll.

## Description

### [Technical Field]

The present invention relates to an electrode manufacturing apparatus, and more particularly, to an electrode manufacturing apparatus for manufacturing electrodes of a secondary battery.

This application claims the benefit of priority based on Korean Patent Application No. 10-2023-0126158, filed on September 21, 2023, and the entire content of the Korean patent application is incorporated herein by reference.

### [Background Art]

With the development of technologies of mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof. Recently, as the field of application of secondary batteries expands, the demand for higher-capacity secondary batteries is increasing rapidly.

A secondary battery includes an electrode assembly in which a separator is interposed between a positive electrode and a negative electrode. In general, the positive electrode and the negative electrode are each formed by coating a current collector of an electrode substrate with an electrode active material. To form high-quality positive and negative electrodes, the electrode active material should be applied to a uniform thickness on the current collector of the electrode substrate.

### [Disclosure]

### [Technical Problem]

The present invention is directed to providing an electrode manufacturing apparatus.

### [Technical Solution]

An aspect of the present invention provides an electrode manufacturing apparatus including a first rolling roll and a second rolling roll spaced apart from each other with an electrode sheet therebetween, and an induction heater configured to apply a high-frequency heating power source to at least one of the first rolling roll and the second rolling roll, in which the induction heater is configured to control a temperature of each region of the first rolling roll.

In example embodiments, the induction heater may be configured to independently control temperatures of a plurality of regions of the first rolling roll that are separated from each other along a width direction of the first rolling roll.

In example embodiments, the induction heater may include a plurality of first induction heating blocks arranged along a width direction of the first rolling roll, and the plurality of first induction heating blocks may be configured to control temperatures of different regions of the first rolling roll.

In example embodiments, the electrode manufacturing apparatus may further include a temperature detector configured to detect a surface temperature of each region of the first rolling roll, and the induction heater may be configured to control the temperature of each region of the first rolling roll based on a signal transmitted from the temperature detector which indicates the surface temperature of each region of the first rolling roll.

In example embodiments, the electrode manufacturing apparatus may further include a thickness detector configured to detect a thickness of each region of the electrode sheet rolled by the first rolling roll and the second rolling roll, and the induction heater may be configured to control the temperature of each region of the first rolling roll based on a signal transmitted from the thickness detector which indicates the thickness of the electrode sheet.

In example embodiments, the induction heater may be further configured to control a temperature of each region of the second rolling roll.

In example embodiments, the induction heater may be configured to independently control temperatures of a plurality of regions of the first rolling roll separated from each other along a width direction of the first rolling roll, and independently control temperatures of a plurality of regions of the second rolling roll separated from each other along a width direction of the second rolling roll.

In example embodiments, the induction heater may include a plurality of first induction heating blocks arranged along a width direction of the first rolling roll and configured to control temperatures of different regions of the first rolling roll, and a plurality of second induction heating blocks arranged along a width direction of the second rolling roll and configured to control temperatures of different regions of the second rolling roll.

In example embodiments, the electrode manufacturing apparatus may further include a temperature detector including a first temperature sensor configured to detect a surface temperature of each region of the first rolling roll and a second temperature sensor configured to detect a surface temperature of each region of the second rolling roll, and the induction heater is configured to control the temperature of each region of the first rolling roll and the temperature of each region of the second rolling roll based on a signal transmitted from the temperature detector which indicates the surface temperature of each region of the first rolling roll and the surface temperature of each region of the second rolling roll.

In example embodiments, the electrode manufacturing apparatus may further include a thickness detector configured to detect a thickness of each region of the electrode sheet rolled by the first rolling roll and the second rolling roll, and the induction heater is configured to control the temperature of each region of the first rolling roll and the temperature of each region of the second rolling roll based on a signal transmitted from the thickness detector which indicates the thickness of each region of the electrode sheet.

In example embodiments, the electrode manufacturing apparatus may further include a temperature detector including a first temperature sensor configured to detect a surface temperature of each region of the first rolling roll and a second temperature sensor configured to detect a surface temperature of each region of the second rolling roll, and a thickness detector configured to detect a thickness of each region of the electrode sheet rolled by the first rolling roll and the second rolling roll, the induction heater is configured to control the temperature of each region of the first rolling roll and the temperature of each region of the second rolling roll based on a temperature sensing signal and a thickness sensing signal, the temperature sensing signal is transmitted from the temperature detector and indicates a surface temperature of each region of the first rolling roll and a surface temperature of each region of the second rolling roll, and the thickness sensing signal is transmitted from the thickness detector and indicates a thickness of each region of the electrode sheet.

In example embodiments, each of the first rolling roll and the second rolling roll may include a material allowing an induced current to flow therethrough.

### [Advantageous Effects]

According to example embodiments of the present invention, temperatures of rolling rolls are controlled by a high-response induction heating method to quickly perform region-specific temperature control of each of the rolling rolls and quickly reduce a region-specific temperature deviation of each of the rolling rolls.

According to example embodiments of the present invention, a temperature of each of regions of the rolling rolls can be controlled, based on temperature sensing information obtained by detecting a temperature of each region of the rolling rolls and/or thickness sensing information obtained by detecting a thickness of each region of a rolled electrode sheet. A thickness dispersion of each region of the electrode sheet can be improved by controlling the temperature of each of the regions of the rolling rolls.

According to example embodiments of the present invention, when the rolling rolls are manufactured in a crown shape to correct a thickness deviation between a central region and an edge region of the electrode sheet, a crown value of the rolling rolls can be controlled through region-specific temperature control of each of the rolling rolls.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of an electrode manufacturing apparatus according to embodiments of the present invention.
FIG. 2 is a front view of the electrode manufacturing apparatus of FIG. 1.
FIG. 3 is a schematic view of an electrode manufacturing apparatus according to embodiments of the present invention.
FIG. 4 is a schematic view of an electrode manufacturing apparatus according to embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that there may be various equivalents and modifications that can replace the configurations at the filing date of the present application.

In addition, the detailed description of well-known configurations or functions related to describing the present invention is omitted when it is determined that it may obscure the subject matter of the present invention.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

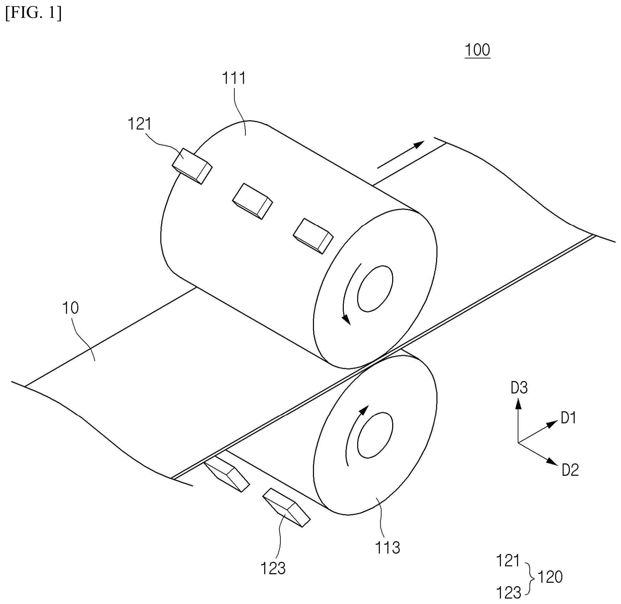

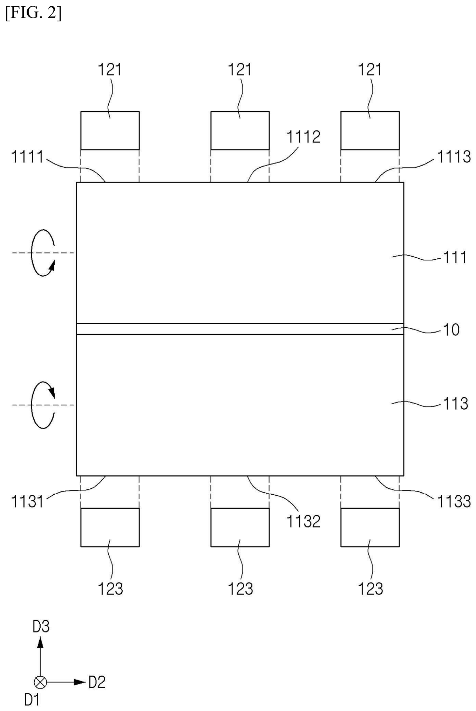

FIG. 1 is a perspective view of an electrode manufacturing apparatus 100 according to embodiments of the present invention. FIG. 2 is a front view of the electrode manufacturing apparatus 100 of FIG. 1.

Referring to FIGS. 1 and 2, the electrode manufacturing apparatus 100 may be configured to roll an electrode sheet 10. The electrode manufacturing apparatus 100 may be configured to perform a roll pressing process to manufacture an electrode for a secondary battery. The electrode sheet 10 may include a substrate and an electrode slurry layer applied to at least one of opposite surfaces of the substrate. The substrate may include a current collector, for example, copper or aluminum. The electrode slurry layer may include a positive electrode active material or a negative electrode active material. The electrode manufacturing apparatus 100 may perform the roll pressing process to press the electrode slurry layer such that the electrode slurry layer applied on at least one of the opposite surfaces of the substrate is flat.

The electrode manufacturing apparatus 100 may include a first rolling roll 111 and a second rolling roll 113. The first rolling roll 111 and the second rolling roll 113 may be configured to rotate about a rotational axis and be spaced apart from each other in a vertical direction (e.g., in a D3 direction) with a rolling gap therebetween. The electrode slurry layer of the electrode sheet 10 may be rolled while the electrode sheet 10 is transferred through the rolling gap between the first rolling roll 111 and the second rolling roll 113. The first rolling roll 111 and the second rolling roll 113 may be spaced apart from each other in a direction (e.g., the D3 direction) perpendicular to a transfer direction (e.g., a D1 direction) of the electrode sheet 10. Each of the first rolling roll 111 and the second rolling roll 113 may be configured to rotate about the rotational axis. A width direction of the first rolling roll 111 may be understood to mean a direction (e.g., a D2 direction) parallel to the rotational axis of the first rolling roll 111, and a width direction of the second rolling roll 113 may be understood to mean the direction (e.g., the D2 direction) parallel to the rotational axis of the second rolling roll 113.

The electrode manufacturing apparatus 100 may include an induction heater 120 configured to induction-heat at least one of the first rolling roll 111 and the second rolling roll 113. The induction heater 120 may heat at least one of the first rolling roll 111 and the second rolling roll 113 by applying a high-frequency heating power source to at least one of the first rolling roll 111 and the second rolling roll 113. The electrode manufacturing apparatus 100 may control temperatures of the first rolling roll 111 and the second rolling roll 113 using the induction heater 120 such that the electrode sheet 10 is hot-rolled within a predetermined target temperature range.

The induction heater 120 may be configured to independently heat the first rolling roll 111 and the second rolling roll 113. For example, the induction heater 120 may heat the first rolling roll 111 and the second rolling roll 113 simultaneously or heat the first rolling roll 111 or the second rolling roll 113.

Each of the first rolling roll 111 and the second rolling roll 113 may include a material through which an induction current may flow, that is, a material capable of being induction-heated. For example, the first rolling roll 111 and the second rolling roll 113 may include nickel, cobalt, iron, stainless steel, copper, chromium, or a combination thereof.

The induction heater 120 may be configured to control a temperature of each region of the first rolling roll 111 and a temperature of each region of the second rolling roll 113. The induction heater 120 may control a temperature of each region of the first rolling roll 111 to adjust a thermal expansion rate of each region of the first rolling roll 111, and control a temperature of each region of the second rolling roll 113 to adjust a thermal expansion rate of each region of the second rolling roll 113. The induction heater 120 may be configured to control both or only one of the temperature of each region of the first rolling roll 111 and the temperature of each region of the second rolling roll 113. The controlling of the temperature of each region of the first rolling roll 111 may include independently or individually adjusting temperatures of different regions of the first rolling roll 111. To independently or individually adjust the temperatures of the different regions of the first rolling roll 111, the induction heater 120 may independently or individually adjust characteristics of a high-frequency power source (e.g., power and an on-off period), a heating time, heating timing, or the like of the different regions for the first rolling roll 111. The controlling of the temperature of each region of the second rolling roll 113 may include independently or individually adjusting temperatures of different regions of the second rolling roll 113. To independently or individually adjust the temperatures of the different regions of the second rolling roll 113, the induction heater 120 may independently or individually adjust characteristics of a high-frequency power source (e.g., power and an on-off period), a heating time, heating timing, or the like for the different regions of the second rolling roll 113.

The induction heater 120 may be configured to independently or individually control temperatures of a plurality of regions 1111, 1112, and 1113 of the first rolling roll 111 that are separated or partitioned along the width direction of the first rolling roll 111. In example embodiments, the induction heater 120 may be configured to independently or individually control temperatures of a central region and two edge regions of the first rolling roll 111.

The induction heater 120 may include a plurality of first induction heating blocks 121 arranged along the width direction of the first rolling roll 111. The plurality of first induction heating blocks 121 may induction-heat different regions of the first rolling roll 111. The plurality of first induction heating blocks 121 may be configured to generate different high-frequency power sources. The induction heater 120 may control an input power source (voltage or current) to be supplied to the plurality of first induction heating blocks 121 to control characteristics of high-frequency power sources to be generated by the plurality of first induction heating blocks 121, so that the plurality of first induction heating blocks 121 may generate different high-frequency power sources. The induction heater 120 may apply the different high-frequency power sources generated by the plurality of first induction heating blocks 121 to the plurality of regions 1111, 1112, and 1113 of the first rolling roll 111 to independently or individually control temperatures of the plurality of regions 1111, 1112, and 1113 of the first rolling roll 111. In example embodiments, the induction heater 120 may include a first central induction heating block configured to induction heat the central region of the first rolling roll 111, and two first edge induction heating blocks configured to induction heat the two edge regions of the first rolling roll 111.

FIGS. 1 and 2 illustrate that the induction heater 120 includes three first induction heating blocks 121 but the number of first induction heating blocks 121 is not limited to three. The induction heater 120 may include several to dozens of first induction heating blocks 121, and be configured to independently control temperatures of several to dozens of regions of the first rolling roll 111 using the several to dozens of first induction heating blocks 121.

In example embodiments, the induction heater 120 may be configured to independently or individually control temperatures of a plurality of regions 1131, 1132 and 1133 of the second rolling roll 113 that are separated or partitioned along the width direction of the second rolling roll 113. In example embodiments, the induction heater 120 may be configured to independently or individually control temperatures of at least a central region and two edge regions of the second rolling roll 113. In example embodiments, the induction heater 120 may include a second central induction heating block configured to induction heat the central region of the second rolling roll 113, and two second edge induction heating blocks configured to induction heat the two edge regions of the second rolling roll 113.

The induction heater 120 may include a plurality of second induction heating blocks 123 arranged along the width direction of the second rolling roll 113. The plurality of second induction heating blocks 123 may induction heat different regions of the second rolling roll 113. The plurality of second induction heating blocks 123 may be configured to generate different high-frequency power sources. The induction heater 120 may control an input power source (voltage or current) to be supplied to the plurality of second induction heating blocks 123 to control characteristics of high-frequency power sources to be generated by the plurality of second induction heating blocks 123, so that the plurality of second induction heating blocks 123 may generate different high-frequency power sources. The induction heater 120 may apply the different high-frequency power sources generated by the plurality of second induction heating blocks 123 to the plurality of regions 1131, 1132, and 1133 of the second rolling roll 113 to independently or individually control temperatures of the plurality of regions 1131, 1132, and 1133 of the second rolling roll 113.

FIGS. 1 and 2 illustrate that the induction heater 120 includes three second induction heating blocks 123 but the number of second induction heating blocks 123 is not limited to three. The induction heater 120 may include several to dozens of second induction heating blocks 123, and be configured to independently control temperatures of several to dozens of regions of the second rolling roll 113 using the several to dozens of second induction heating blocks 123.

In example embodiments, temperatures of the first rolling roll 111 and the second rolling roll 113 may be controlled by the induction heater 120. In some example embodiments, temperatures of the first rolling roll 111 and the second rolling roll 113 may be controlled by the induction heater 120 and a temperature control device using a heat transfer fluid supplied to the first rolling roll 111 and the second rolling roll 113.

### (Second Embodiment)

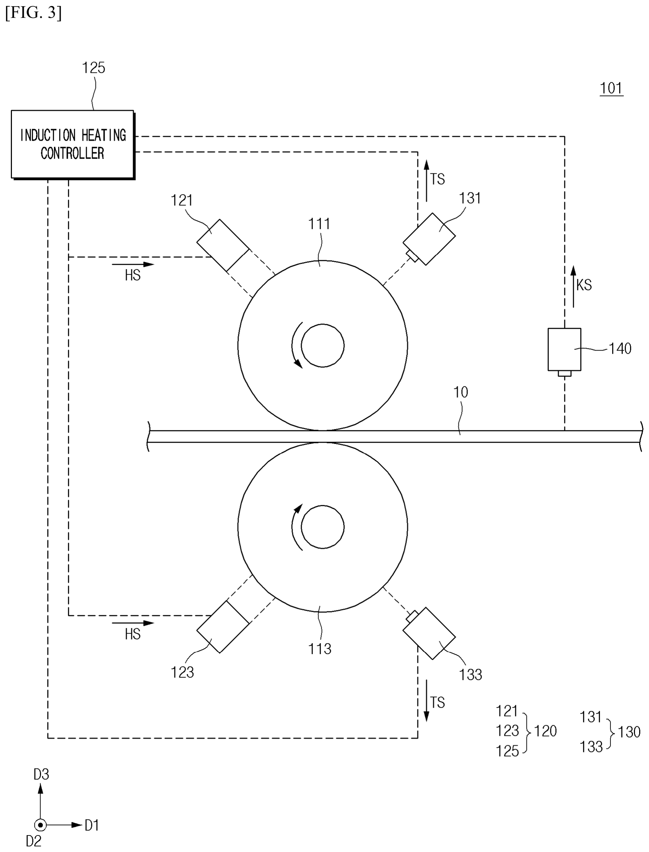

FIG. 3 is a schematic view of an electrode manufacturing apparatus 101 according to embodiments of the present invention.

Referring to FIGS. 1 to 3, the electrode manufacturing apparatus 101 may include the first rolling roll 111, the second rolling roll 113, the induction heater 120 that includes the plurality of first induction heating blocks 121 and the plurality of second induction heating blocks 123, a temperature detector 130, a thickness detector 140, and a controller.

The temperature detector 130 may be configured to detect a temperature of the first rolling roll 111 and a temperature of the second rolling roll 113. The temperature detector 130 may include a first temperature sensor 131 configured to sense a surface temperature of the first rolling roll 111, and a second temperature sensor 133 configured to sense a surface temperature of the second rolling roll 113.

The first temperature sensor 131 may be provided at a side of the first rolling roll 111, and sense a temperature for each region of the first rolling roll 111. The first temperature sensor 131 may be configured to sense temperatures of a plurality of regions 1111, 1112, and 1113 of the first rolling roll 111 that are separated or partitioned along a width direction of the first rolling roll 111. The first temperature sensor 131 may be a single temperature sensor or include a plurality of temperature sensors. The first temperature sensor 131 may be configured to sense at least a surface temperature of a central region of the first rolling roll 111 and surface temperatures of two edge regions of the first rolling roll 111. If necessary, the first temperature sensor 131 may be configured to individually sense surface temperatures of several to dozens of regions of the first rolling roll 111 that are separated or partitioned along the width direction of the first rolling roll 111.

The second temperature sensor 133 may be provided at a side of the second rolling roll 113, and sense a temperature for each region of the second rolling roll 113. The second temperature sensor 133 may be configured to sense temperatures of a plurality of regions 1131, 1132, and 1133 of the second rolling roll 113 that are separated or partitioned along a width direction of the second rolling roll 113. The second temperature sensor 133 may be a single temperature sensor or include a plurality of temperature sensors. The second temperature sensor 133 may be configured to sense at least a surface temperature of a central region of the second rolling roll 113 and surface temperatures of two edge regions of the second rolling roll 113. If necessary, the second temperature sensor 133 may be configured to individually sense surface temperatures of several to dozens of regions of the second rolling roll 113 that are separated or partitioned along the width direction of the second rolling roll 113.

The first temperature sensor 131 and the second temperature sensor 133 may include a contact type temperature sensor and/or a non-contact type temperature sensor. For example, the first temperature sensor 131 and the second temperature sensor 133 may include a non-contact temperature sensor such as an infrared temperature sensor or a thermal imaging camera.

The thickness detector 140 may detect a thickness of the electrode sheet 10 passing through the first rolling roll 111 and the second rolling roll 113. That is, the thickness detector 140 may detect the thickness of the electrode sheet 10 rolled and processed by the first rolling roll 111 and the second rolling roll 113. The thickness detector 140 may be configured to detect a thickness of each region of the electrode sheet 10. The thickness detector 140 may be configured to detect thicknesses of a plurality of regions of the electrode sheet 10 that are separated or partitioned along a width direction of the electrode sheet 10. The thickness detector 140 may include a single thickness sensor or a plurality of thickness sensors. The thickness detector 140 may be configured to detect at least a thickness of a central region of the electrode sheet 10 and thicknesses of two edge regions of the electrode sheet 10. If necessary, the thickness detector 140 may be configured to detect thicknesses of several to dozens of regions of the electrode sheet 10 that are separated or partitioned along the width direction of the electrode sheet 10.

The thickness detector 140 may include a contact type displacement sensor and/or a non-contact type displacement sensor. For example, the thickness detector 140 may include a non-contact type thickness sensor such as a laser displacement sensor.

The induction heater 120 may include an induction heating controller 125 configured to control induction heating of the first rolling roll 111 and the second rolling roll 113, based on at least one of a temperature sensing signal TS transmitted from the temperature detector 130 and a thickness sensing signal KS transmitted from the thickness detector 140. The induction heating controller 125 may generate a heating control signal HS based on at least one of the temperature sensing signal TS transmitted from the temperature detector 130 and the thickness sensing signal KS transmitted from the thickness detector 140, and apply the generated heating control signal HS to the plurality of first induction heating blocks 121 and the plurality of second induction heating blocks 123. The temperature sensing signal TS transmitted from the temperature detector 130 may include surface temperature information of the regions 1111, 1112, and 1113 of the first rolling roll 111 in the width direction of the first rolling roll 111, and surface temperature information of the regions 1131, 1132, and 1133 of the second rolling roll 113 in the width direction of the second rolling roll 113. The thickness sensing signal KS transmitted from the thickness detector 140 may include thickness information of a plurality of regions of the electrode sheet 10 in the width direction of the electrode sheet 10. The induction heating controller 125 may include an input unit to which the temperature sensing signal TS from the temperature detector 130 and the thickness sensing signal KS from the thickness detector 140 are input, and at least one processor for processing at least one of the temperature sensing signal TS from the temperature detector 130 and the thickness sensing signal KS from the thickness detector 140. In example embodiments, the induction heating controller 125 may generate the heating control signal HS based on both the temperature sensing signal TS from the temperature detector 130 and the thickness sensing signal KS from the thickness detector 140, and apply the generated heating control signal HS to the plurality of first induction heating blocks 121 and the plurality of second induction heating blocks 123 to control induction heating of the first rolling roll 111 and the second rolling roll 113.

In example embodiments, the induction heating controller 125 may control a temperature of each region of the first rolling roll 111 and a temperature of each region of the second rolling roll 113, based on the temperature sensing signal TS transmitted from the temperature detector 130. For example, when the temperatures of the regions of the first rolling roll 111 are lower than a target temperature, the induction heating controller 125 may increase the temperatures of the regions of the first rolling roll 111 by controlling either a heating time or a high-frequency power source output from the first induction heating blocks 121 corresponding to the regions of the first rolling roll 111. For example, when the temperatures of the regions of the first rolling roll 111 are higher than the target temperature, the induction heating controller 125 may stop operation of the first induction heating blocks 121 corresponding to the regions of the first rolling roll 111 until the temperatures of the corresponding regions of the first rolling roll 111 reach the target temperature. Similarly, when the temperatures of the regions of the second rolling roll 113 are lower or higher than the target temperature, the induction heating controller 125 may control operation of the second induction heating blocks 123 corresponding to the regions of the second rolling roll 113 so that the temperatures of the corresponding regions of the second rolling roll 113 reach the target temperature.

In example embodiments, the induction heating controller 125 may control a temperature of each region of the first rolling roll 111 and a temperature of each region of the second rolling roll 113, based on the thickness sensing signal KS transmitted from the thickness detector 140. For example, when a thickness deviation between the central region and the edge regions of the electrode sheet 10 is out of a target range, the induction heating controller 125 may adjust local expansion rates of the first rolling roll 111 and the second rolling roll 113 by controlling the temperature of each region of the first rolling roll 111 and the temperature of each region of the second rolling roll 113, so that the thickness deviation between the central region and the edge regions of the electrode sheet 10 is within the target range. For example, when it is determined that the thickness of the central region of the electrode sheet 10 is greater than the thickness of the edge regions of the electrode sheet 10 and a thickness deviation between the central region and the edge regions of the electrode sheet 10 is beyond a target range, the induction heater 120 may increase a temperature of a central part of at least one of the first and second rolling rolls 111 and 113 to adjust the thickness deviation to be in the target range. When the temperature of the central part of at least one of the first and second rolling rolls 111 and 113 increases, a thermal expansion rate of the central part of at least one of the first and second rolling rolls 111 and 113 may increase, thus resulting in an increase of a thickness of the central part of at least one of the first and second rolling rolls 111 and 113 and an increase of a rolling rate of the central region of the electrode sheet 10.

According to example embodiments of the present invention, temperatures of rolling rolls are controlled by a high-response induction heating method to quickly perform region-specific temperature control of each of the rolling rolls and quickly reduce a region-specific temperature deviation of each of the rolling rolls.

According to example embodiments of the present invention, a temperature of each of regions of the rolling rolls can be controlled, based on temperature sensing information obtained by detecting temperatures of regions of the rolling rolls and/or thickness sensing information obtained by detecting a thickness of each region of the rolled electrode sheet 10. A thickness dispersion of each region of the electrode sheet 10 can be improved by controlling the temperature of each of the regions of the rolling rolls.

According to example embodiments of the present invention, when the rolling rolls are manufactured in a crown shape to correct a thickness deviation between the central region and the edge regions of the electrode sheet 10, a crown value of the rolling rolls can be controlled through region-specific temperature control of each of the rolling rolls.

### (Third Embodiment)

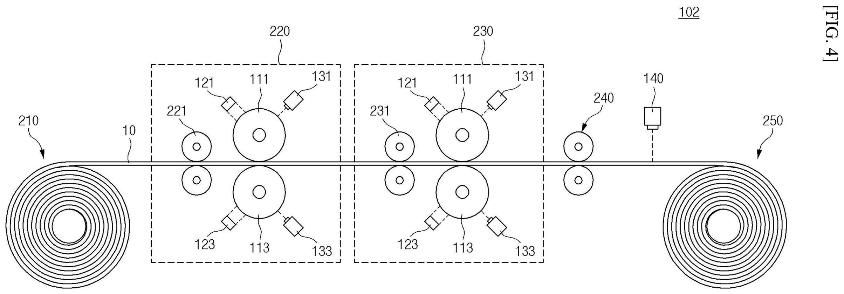

FIG. 4 is a schematic view of an electrode manufacturing apparatus 102 according to embodiments of the present invention. Hereinafter, a description of parts of the electrode manufacturing apparatus 102 that are the same as those described above will be omitted or simplified.

Referring to FIG. 4, the electrode manufacturing apparatus 102 may include an unwinder 210, a first rolling device 220, a second rolling device 230, a cooling roll unit 240, a thickness detector 140, and a rewinder 250. The electrode sheet 10 may be transferred between the unwinder 210 and the rewinder 250. The electrode sheet 10 supplied from the unwinder 210 may be wound around the rewinder 250 while being sequentially passed through the first rolling device 220, the second rolling device 230, the cooling roll unit 240, and the thickness detector 140.

The first rolling device 220 may be configured to perform a primary roll pressing process on the electrode sheet 10. The first rolling device 220 may include the first and second rolling rolls 111 and 113, an induction heater including the plurality of first induction heating blocks 121 and the plurality of second induction heating blocks 123, and a temperature detector including the first temperature sensor 131 and the second temperature sensor 133 described above with reference to FIGS. 1 to 3. The first rolling device 220 may include a pre-heating roller 221 configured to preheat the electrode sheet 10 before the electrode sheet 10 is rolled by the first rolling roll 111 and the second rolling roll 113. In the present disclosure, in relation to the first rolling device 220, the first rolling roll 111 and the second rolling roll 113 may be referred to as a first upper rolling roll and a first lower rolling roll, respectively, the first induction heating block 121 and the second induction heating block 123 may be referred to as a first upper induction heating block and a first lower induction heating block, respectively, and the first temperature sensor 131 and the second temperature sensor 133 may be referred to as a first upper temperature sensor and a first lower temperature sensor, respectively.

The second rolling device 230 may be configured to perform a secondary roll pressing process on the electrode sheet 10. The second rolling device 230 may include the first and second rolling rolls 111 and 113, an induction heater including the plurality of first induction heating blocks 121 and the plurality of second induction heating blocks 123, and a temperature detector including the first temperature sensor 131 and the second temperature sensor 133 described above with reference to FIGS. 1 to 3. The second rolling device 230 may include a pre-heating roller 231 configured to preheat the electrode sheet 10 before the electrode sheet 10 is rolled by the first rolling roll 111 and the second rolling roll 113. In the present disclosure, in relation to the second rolling device 230, the first rolling roll 111 and the second rolling roll 113 may be referred to as a second upper rolling roll and a second lower rolling roll, respectively, the first induction heating block 121 and the second induction heating block 123 may be referred to as a second upper induction heating block and a second lower induction heating block, respectively, and the first temperature sensor 131 and the second temperature sensor 133 may be referred to as a second upper temperature sensor and a second lower temperature sensor, respectively.

The cooling roll unit 240 may include a cooling roll configured to cool the electrode sheet 10 to a target temperature before the electrode sheet 10 passing through the second rolling device 230 is wound around the rewinder 250.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that there may be various equivalents and modifications that can replace the configurations at the filing date of the present application.

## Claims

1. An electrode manufacturing apparatus comprising:
a first rolling roll and a second rolling roll spaced apart from each other with an electrode sheet therebetween; and
an induction heater configured to apply a high-frequency heating power source to at least one of the first rolling roll and the second rolling roll,
wherein the induction heater is configured to control a temperature of each region of the first rolling roll.

2. The electrode manufacturing apparatus of claim 1, wherein
the induction heater is configured to independently control temperatures of a plurality of regions of the first rolling roll that are separated from each other along a width direction of the first rolling roll.

3. The electrode manufacturing apparatus of claim 1, wherein
the induction heater comprises a plurality of first induction heating blocks arranged along a width direction of the first rolling roll,
wherein the plurality of first induction heating blocks are configured to control temperatures of different regions of the first rolling roll.

4. The electrode manufacturing apparatus of claim 1, further comprising
a temperature detector configured to detect a surface temperature of each region of the first rolling roll,
wherein the induction heater is configured to control the temperature of each region of the first rolling roll based on a signal transmitted from the temperature detector which indicates the surface temperature of each region of the first rolling roll.

5. The electrode manufacturing apparatus of claim 1, further comprising
a thickness detector configured to detect a thickness of each region of the electrode sheet rolled by the first rolling roll and the second rolling roll,
wherein the induction heater is configured to control the temperature of each region of the first rolling roll based on a signal transmitted from the thickness detector which indicates the thickness of the electrode sheet.

6. The electrode manufacturing apparatus of claim 1, wherein
the induction heater is further configured to control a temperature of each region of the second rolling roll.

7. The electrode manufacturing apparatus of claim 6, wherein
the induction heater is configured to
independently control temperatures of a plurality of regions of the first rolling roll separated from each other along a width direction of the first rolling roll, and
independently control temperatures of a plurality of regions of the second rolling roll separated from each other along a width direction of the second rolling roll.

8. The electrode manufacturing apparatus of claim 6, wherein
the induction heater comprises:
a plurality of first induction heating blocks arranged along a width direction of the first rolling roll, and configured to control temperatures of different regions of the first rolling roll; and
a plurality of second induction heating blocks arranged along a width direction of the second rolling roll, and configured to control temperatures of different regions of the second rolling roll.

9. The electrode manufacturing apparatus of claim 6, further comprising
a temperature detector including a first temperature sensor configured to detect a surface temperature of each region of the first rolling roll, and a second temperature sensor configured to detect a surface temperature of each region of the second rolling roll,
wherein the induction heater is configured to control the temperature of each region of the first rolling roll and the temperature of each region of the second rolling roll based on a signal transmitted from the temperature detector which indicates the surface temperature of each region of the first rolling roll and the surface temperature of each region of the second rolling roll.

10. The electrode manufacturing apparatus of claim 6, further comprising
a thickness detector configured to detect a thickness of each region of the electrode sheet rolled by the first rolling roll and the second rolling roll,
wherein the induction heater is configured to control the temperature of each region of the first rolling roll and the temperature of each region of the second rolling roll based on a signal transmitted from the thickness detector which indicates the thickness of each region of the electrode sheet.

11. The electrode manufacturing apparatus of claim 6, further comprising:
a temperature detector including a first temperature sensor configured to detect a surface temperature of each region of the first rolling roll, and a second temperature sensor configured to detect a surface temperature of each region of the second rolling roll; and
a thickness detector configured to detect a thickness of each region of the electrode sheet rolled by the first rolling roll and the second rolling roll,
wherein the induction heater is configured to control the temperature of each region of the first rolling roll and the temperature of each region of the second rolling roll based on a temperature sensing signal and a thickness sensing signal, wherein the temperature sensing signal is transmitted from the temperature detector and indicates a surface temperature of each region of the first rolling roll and a surface temperature of each region of the second rolling roll, and the thickness sensing signal is transmitted from the thickness detector and indicates a thickness of each region of the electrode sheet.

12. The electrode manufacturing apparatus of claim 1, wherein
each of the first rolling roll and the second rolling roll comprises a material allowing an induced current to flow therethrough.
